# EUROPÄISCHE PATENTSCHRIFT

(11) **EP 3 289 010 B1**
(45) Veröffentlichungstag und Bekanntmachung des Hinweises auf die Patenterteilung: **24.07.2019**
(21) Anmeldenummer: 16723271.9
(22) Anmeldetag: 28.04.2016
(51) Int. Cl.: C08K 3/26, C09D 123/08, C09J 5/06

(54) **VERFAHREN ZUR VERSIEGLUNG VON OXIDISCHEN SCHUTZSCHICHTEN AUF METALLSUBSTRATEN**
PROCESS OF SEALING OF OXIDE PROTECTIVE LAYERS ON METAL SUBSTRATES
METHODE DE SCELLAGE DE REVETEMENTS OXYDÉS PROTECTIVES SUR DES SUBSTRATS MÉTALLIQUES

(30) Priorität: 30.04.2015 DE 102015208076
(43) Veröffentlichungstag der Anmeldung: 07.03.2018
(73) Patentinhaber: Henkel AG & Co. KGaA, 40589 Düsseldorf (DE)
(72) Erfinder: AUWEILER, Nicole, 41541 Dormagen (DE); DAWIDOWSKI, Ulrich, 72218 Wildberg (DE)
(86) Internationale Anmeldenummer: PCT/EP2016/059465
(87) Internationale Veröffentlichungsnummer: WO 2016/174122

(56) Entgegenhaltungen:
- EP-A1- 2 505 625
- DE-A1-102012 223 356
- JP-A- 2005 075 878

## Beschreibung

Die vorliegende Erfindung betrifft ein Verfahren zur Versiegelung von oxidischen Schutzschichten auf Metallsubstraten unter Verwendung von wässriger Zusammensetzungen enthaltend ein Copolymer oder eine Copolymerenmischung zumindest eines aliphatischen und acyclischen Alkens mit zumindest einer α,β-ungesättigten Carbonsäure in wasserdispergierter und/oder wassergelöster Form mit einer Säurezahl des Copolymers oder der Copolymerenmischung von zumindest 20 mg KOH / g, jedoch nicht mehr als 200 mg KOH / g. Insbesondere umfasst die Erfindung auch die Verwendung derartiger Copolymere oder einer solchen Copolymerenmischung zur Versiegelung von Schutzschichten basierend auf Oxiden und/oder Hydroxiden der Elemente Si, Ti und/oder Zr auf einem Aluminiumsubstrat, wobei die Schutzschicht eine Dicke von zumindest 2 µm aufweist.

Die elektrolytischen Erzeugung von Oxidschichten auf Metallsubstraten, insbesondere auf Aluminium, ist ein im Stand der Technik weit verbreitete Methode zur Herstellung korrosionsschützender und/oder dekorativer Überzüge, beispielsweise im Eloxal-Verfahren oder in plasmaelektrolytischen Abscheideverfahren. Elektrolytisch hergestellte oxidsiche Schutzschichten schützen den metallischen Werkstoff vor Korrosion und Verwitterung und erhöhen üblicherweise zusätzlich die Oberflächenhärte und Abriebfestigkeit der aus diesen Werkstoffen hergestellten Bauteile.

Während im Eloxal-Verfahren eine elektrolytische Oxidschicht auf Aluminiumsubstraten durch Anlegen eines anodischen Potentials zugänglich ist, die sodann im Wesentlichen aus Oxiden und Hydroxiden von Aluminium besteht, sind im plasmaelektrolytischen Verfahren aufgrund der Zersetzung des Elektrolyten im Plasma auch Oxidschichten erhältlich, die im Wesentlichen aus Oxiden und Hydroxiden von im Elektrolyten enthaltenen Metallelementen zusammengesetzt sind. Weiterhin lassen sich im plasmaelektrolytischen Verfahren neben Aluminium oder mit einer Aluminiumschicht versehenen Werkstoffen auch andere Werkstoffe wie Magnesium, Titan und Zink mit einer oxidischen Schutzschicht beaufschlagen. Ein typisches plasmaelektrolytisches Verfahren zur Aufbringung einer Schutzschicht basierend auf Titanoxid ist in der WO 2003/029529 für die Werkstoffe Magnesium und Aluminium beschrieben.

Die elektrischen Rahmenbedingungen eines Eloxal-Verfahrens weichen üblicherweise deutlich von denen eines plasmaelektrolytischen Verfahrens zur Erzeugung oxidischer Schutzschichten ab. Während das Eloxal-Verfahren elektrolytabhängig bei Stromdichten im Bereich von 1-2 A/dm² und Spannungen von bis zu 25 V betrieben wird, werden plasmaelektrolytisch hergestellte Schutzschichten auf Aluminium in ähnlicher Schichtdicke im Pulsbetrieb unter Aufwendung von Spannungen in der Spitze von bis zu 500 V erzeugt, wobei mittlere Stromdichten bei 5-10 A/dm² liegen. Die Dicke der in den elektrolytischen Verfahren aufgebrachten Schutzschichten ist weitestgehend variabel einstellbar, jedoch sind für die Eigenschaft der oxidischen Schutzschicht gegen Korrosion bei Feuchtauslagerung oder in Kontakt mit Flüssigkeiten zu schützen Schichtdicken von zumindest 2 µm erforderlich, wobei typische Schichtdicken, die industriellen Anforderungen genügen, im Bereich von 5-50 µm liegen.

Den hier skizzierten Verfahren zur Aufbringung oxidischer Schutzschichten ist gemein, dass aufgrund der Natur des unter elektrolytischen Bedingungen fortgeführten Abscheideprozesses poröse Schichten ausgebildet werden, die daher keinen dauerhaften effektiven Schutz gegenüber stark korrosiven Medien bieten können. Üblicherweise werden die frisch hergestellten oxidischen Schutzschichten im Stand der Technik zur Versiegelung der Poren auf unterschiedliche Weise nachbehandelt. Diese dem elektrolytischen Verfahren nachfolgende Prozess wird im technischen Sprachgebrauch als Verdichtung oder Versiegelung bezeichnet. Grundsätzlich kann jede poröse oxidische Schutzschicht unabhängig von der Methode ihrer Bereitstellung versiegelt werden. Allerdings haben sich für die gängigen Verfahren zur Ausbildung oxidischer Schutzschichten und die in diesen Verfahren üblicherweise beschichteten Metallsubstrate jeweils spezifische Nachbehandlungsmethoden etabliert. Etablierte Verfahren zur Versiegelung existieren insbesondere für elektrolytisch aufgebrachte oxidische Schutzschichten auf Aluminiumsubstraten, bspw. das Kaltversiegelung in Gegenwart von Metallkatalysatoren oder die Heißversiegelung jeweils mit wässrigen Zusammensetzungen.

Häufig werden dem Versiegelungsbad anorganische Verbindungen hinzugesetzt, die die Hydrolyse der porösen Aluminiumoxidschicht beschleunigen und einen zusätzlichen oxidischen Schichtaufbau oder zumindest eine Oberflächenmodifizierung der Oxidschicht bewirken. So können Versiegelungsbäder im Stand der Technik wasserlösliche Silikate für eine zusätzliche Steigerung der Korrosionsbeständigkeit der Oxidschicht (US 6,686,053; EP 1 873 278 A1) oder für eine Hydrophilisierung der Werkstoffoberfläche bei der Herstellung von lithographischen Platten (US 3,181,461, US 2,714,066) enthalten.

In einigen Anwendungsfeldern sollte die Versiegelung der porösen oxidischen Schutzschichten zudem einen geeigneter Lackhaftgrund erzeugen. Hierbei erscheint die klassische Versiegelung, die auf einen Mechanismus der Hydrolyse, Quellung und nachträglichen Verdichtung beim Trocknen setzt, ungeeignet, da die versiegelten Oberflächen üblicherweise eine geringere Rauigkeit aufweisen und daher weniger Ankerpunkte für eine organische Beschichtung anbieten.

Eine Versiegelung von porösen Werkstoffen mit Hilfe vernetzender organischer Harze ist prinzipiell bei der Vakuum-Imprägnierung bekannt, jedoch ist diese Methode verfahrenstechnisch sehr aufwendig. Zudem gilt es zu gewährleisten, dass eine Versiegelung erfolgt, die für eine Vielzahl oxidischer Schutzschichten geeignet ist, die Korrosion des Metallsubstrats zu unterbinden. Generell können dies weder die im Stand der Technik bekannten Heiß- und Kaltversiegelungen, die beispielsweise keine Nachverdichtung von Titanoxid-basierten Schutzschichten bewirken, noch jeder beliebige in den Poren der oxidischen Schutzschicht vernetzte organische Harz leisten.

In der WO 2012/174386 wird beschrieben, dass plasmaelektrolytisch abgeschiedene Titanoxid-basierte Schutzschichten auf Aluminium zum Zwecke der Versiegelung und der Vermittlung eines niedrigen Reibungskoeffizienten mit einer wässrigen Dispersion eines Urethan-Harzes behandelt werden. Dort werden derart behandelte Aluminiumwerkstoffe für Zylinderlaufbahnen in Kurbelgehäusen von Verbrennungsmotoren vorgeschlagen. Beschichtungen mti Acrylpolymeren werden in DE-A-10203334456, EP-A-2505625 und JP-A-2005/075878 beschreiben.

Die Aufgabe der vorliegenden Erfindung bestand nun darin, ein Verfahren zur Versiegelung poröser Schutzschichten zu entwickeln mit dem eine Vielzahl von Metallsubstraten effektiv gegenüber stark korrosiven Medien geschützt werden kann. Insbesondere sollte dies für Aluminiumsubstrate geleistet werden, die mit einer Schutzschicht basierend auf Oxiden und/oder Hydroxiden der Elemente Si, Ti und/oder Zr versehen sind. Weiterhin sollte das Verfahren die Applikation des versiegelnden Mediums mit herkömmlichen Auftragsmethoden wie Sprühen und Tauchen ermöglichen.

Diese Aufgabe wurde nun gelöst mittels eines Verfahrens zur Versiegelung von Metallsubstraten, entsprechend dem Anspruch 1.

Eine Versiegelung bezeichnet erfindungsgemäß einen oder mehrere Behandlungsschritte umfassend zumindest einen nasschemischen Behandlungsschritt, die geeignet sind zur Verringerung der Porösität der Schutzschicht und/oder der Verringerung der freien Substratoberfläche. Eine solche Eignung liegt immer dann vor, wenn im nasschemischen Behandlungsschritt eine Menge eines filmbildenden organischen Polymers enthalten ist.

Eine Schutzschicht bezeichnet erfindungsgemäß solche nicht metallischen Beschichtungen, die in einer Schichtdicke von größer gleich 2 µm auf dem metallischen Substrat aufgebracht sind, wobei die Schichtdicke mittels Wirbelstromverfahren als arithmetisches Mittel über zumindest 5 Messpunkte pro Quadratdezimeter jeweils mit einer Kontaktfläche von zumindest einem Quadratmillimeter, aber nicht mehr als einem Quadratzentimeter bestimmt werden kann.

Eine Schutzschicht ist erfindungsgemäß dann oxidisch, wenn die Beschichtung im Wesentlichen auf Oxiden und/oder Hydroxiden, vorzugsweise auf Oxiden und/oder Hydroxiden von Elementen, die keine Hauptbestandteile des Metallsubstrats sind, insbesondere auf Oxiden und/oder Hydroxiden der Elemente Si, Ti, Zr, Nb, Ta und/oder Sn basiert, wobei der Anteil an Nichtmetallen jeweils vorzugsweise kleiner als 10 at.% ist.

Für eine zur Versiegelung hinreichende Menge an filmbildenden organischen Polymer sind Verfahren erfindungsgemäß bevorzugt, in denen der Anteil des Copolymer oder der Copolymerenmischung bezogen auf die wässrige Zusammensetzung zur Versiegelung zumindest 5 Gew.-% beträgt. Allerdings ist für die vorteilhafte Applikation der Zusammensetzung zur Versiegelung im Tauchen oder Sprühen bevorzugt, wenn der der Anteil des Copolymer oder der Copolymerenmischung nicht mehr als 30 Gew.-%, besonders bevorzugt nicht mehr als 20 Gew.-%, jeweils bezogen auf die Zusammensetzung zur Versiegelung beträgt.

In diesem Zusammenhang ist auch zu berücksichtigen, dass die Viskosität der Zusammensetzung zur Versiegelung keinen Wert überschreitet, für den eine Applikation derselben durch Tauchen oder Aufsprühen nur mit aufwendigen verfahrenstechnischen Maßnahmen wie einer erhöhten Applikationstemperatur oder einem erhöhten Sprühdruck möglich ist. Dementsprechend soll die Zusammensetzung zur Versiegelung derart formuliert sein, dass eine Auslaufzeit gemessen mit DIN Auslaufbecher 4mm von nicht mehr als 50 Sekunden vorliegt, vorzugsweise beträgt die Auslaufzeit nicht mehr als 40 Sekunden. Umgekehrt ist es jedoch bevorzugt, dass die Auslaufzeit gemessen mit DIN Auslaufbecher 4mm zumindest 20 Sekunden beträgt, um zu gewährleisten, dass eine hinreichende Menge eines Nassfilms auf den Flächen und den Kanten des zu versiegelnden Bauteils verbleibt. Die Auslaufzeit ist dabei bei 20 °C nach der Norm DIN 53211 zu bestimmen. Dem Fachmann sind dabei Methoden zur Einstellung der Viskosität mittels rheologischer Additive grundsätzlich bekannt.

Gemäß vorliegender Erfindung ist ein Polymer in Wasser gelöst oder in Wasser dispergiert, wenn es in der wässrigen Phase einen mittleren Teilchendurchmesser von weniger als 1 µm einnimmt. Der mittlere Teilchendurchmesser kann dabei gemäß ISO 13320:2009 mittels Laserlichtbeugung aus kumulativen Partikelgrößenverteilungen als sogenannter D50-Wert unmittelbar in der jeweiligen Zusammensetzung bei 20 °C bestimmt werden.

Als Copolymerenmischung gelten erfindungsgemäß Mischungen chemisch und/oder strukturell unterschiedlicher Copolymere zumindest eines aliphatischen und acyclischen Alkens mit zumindest einer α,β-ungesättigten Carbonsäure. So können in einer Copolymerenmischung einer erfindungsgemäßen Lackformulierung beispielsweise Copolymere, die unterschiedliche Alkene oder unterschiedliche α,β-ungesättigte Carbonsäuren als Comonomere enthalten oder eine unterschiedliche Anzahl an ansonsten gleichen Comonomeren im Copolymer aufweisen, nebeneinander vorliegen.

Die Säurezahl ist erfindungsgemäß eine experimentell zu bestimmende Kennzahl, die ein Maß für die Anzahl der freien Säuregruppen im Copolymer oder in der Copolymerenmischung ist. Die Säurezahl wird bestimmt, indem eine eingewogene Menge des Copolymers oder der Copolymerenmischung in einem Lösemittelgemisch aus Methanol und destilliertem Wasser im Volumenverhältnis 3 : 1 gelöst und anschließend mit 0,05 mol/l KOH in Methanol potentiometrisch titriert wird. Die potentiometrische Messung erfolgt mit einer Einstabmesskette (LL-Solvotrode® der Fa. Metrohm; Bezugselektrolyt: 0,4 mol/l Tetraethylammoniumbromid in Ethylenglykol). Die Säurezahl entspricht dabei der hinzugesetzten Menge an KOH in Milligramm pro Gramm Copolymer bzw. Copolymerenmischung im Wendepunkt der potentiometrischen Titrationskurve.

Liegt die Säurezahl der Copolymere oder Copolymerenmischung von Alkenen und α,β-ungesättigten Carbonsäuren unterhalb von 20 mg KOH / g, so besitzt eine Zusammensetzung zur Versiegelung nach der Art der vorliegenden Erfindung eine nicht ausreichende Benetzung und Haftung nach deren Aushärtung auf den oxidischen Schutzschichten der Metallsubstrate und eignet sich demnach auch nicht zur Versiegelung der Poren dieser Schutzschichten. Umgekehrt bedingt eine Säurezahl der Copolymere oder der Copolymerenmischung von Alkenen und α,β-ungesättigten Carbonsäuren oberhalb von 200 mg KOH / g als versiegelnder Bestandteil der Zusammensetzung zur Versiegelung, dass eine nur unzureichende Barrierewirkung nach Aushärtung der versiegelten Bestandteile gegenüber korrosiv wirkenden Ionen in wässrigen Medien resultiert und das Metallsubstrat als solches nicht ausreichend geschützt wird.

Der Gewichtsanteil der aliphatischen und acyclischen Alkene beträgt im Copolymer oder in der Copolymerenmischung vorzugsweise zumindest 40 Gew.-%, besonders bevorzugt zumindest 60 Gew.%, jedoch vorzugsweise nicht mehr als 95 Gew.-%. Hierdurch wird gewährleistet, dass die Durchlässigkeit der auf dem zu versiegelnden oxidischen Schutzschicht ausgehärteten und/oder getrockneten Zusammensetzung enthaltend das Copolymer oder die Copolymerenmischung für Ionen bei Kontakt mit wässrigen Medien bei gleichzeitig hinreichender Haftung zum mit der oxidischen Schtzschicht versehenen Metallsubstrats maximal erniedrigt wird.

Bevorzugte aliphatische und acyclische Alkene der erfindungsgemäß in der Zusammensetzung zur Versiegelung enthaltenen Copolymere oder der Copolymerenmischung sind ausgewählt aus Ethen, Propen, 1-Buten, 2-Buten, Isobuten, 1,3-Butadien und/oder 2-Methylbuta-1,3-dien, besonders bevorzugt Ethen und/oder Propen.

Bevorzugte α,β-ungesättigten Carbonsäuren der erfindungsgemäß in der Zusammensetzung zur Versiegelung enthaltenen Copolymere oder der Copolymerenmischung sind ausgewählt aus Zimtsäure, Crotonsäure, Fumarsäure, Itaconsäure, Maleinsäure, Acrylsäure und/oder Methacrylsäure, besonders bevorzugt Acrylsäure und/oder Methacrylsäure, insbesondere Acrylsäure.

Weitere Comonomere, die in einer wässrigen Zusammensetzung zur Versiegelung im erfindungsgemäßen Verfahren zusätzlicher Bestandteil der Copolymere oder Copolymerenmischung sein können, sind ausgewählt aus Estern von α,β-ungesättigten Carbonsäuren, vorzugsweise lineare oder verzweigte Alkylester der Acrylsäure und/oder Methacrylsäure mit nicht mehr als 12 Kohlenstoffatomen im aliphatischen Rest. Derartige Comonomere verbessern die Haftung des ausgehärteten und/oder getrockneten Zusammensetzung zur Versiegelung auf den mit der oxidischen Schutzschicht versehenen Metallsubstraten aufgrund einer erhöhten Beweglichkeit des Polymergrundgerüstes, die wiederum die Orientierung der oberflächenaffinen Säuregruppen zu oxidischen und metallischen Oberflächen erleichtert. Dieser Effekt kommt insbesondere bei niedrigen Säurezahlen des Copolymers unterhalb von 100 mg KOH / g zum Tragen. Es zeigt sich allgemein, dass niedrige Säurezahlen der Copolymere oder der Copolymerenmischung die Barriereeigenschaften der ausgehärteten und/oder getrockneten Zusammensetzung zur Versiegelung bei Exposition mit wässrigen Medien verbessern. Dementsprechend sind Copolymere oder Copolymermischungen, die zusätzlich die zuvor beschriebenen Comonomere enthalten, mit Säurezahlen unterhalb von 100 mg KOH / g, insbesondere unterhalb von 60 mg KOH / g erfindungsgemäß bevorzugt.

Für eine gute Filmbildung während des Aushärtens der Zusammensetzung zur Versiegelung ist es erforderlich, dass das in Wasser gelöste und/oder dispergierte Copolymer oder die in Wasser gelöste und/oder dispergierte Copolymerenmischung nach Verflüchtigung der wässrigen Phase in den schmelzflüssigen Zustand übergeht. Um diesem Erfordernis zu genügen, sind Copolymere oder Coplymerenmischungen bevorzugt, die als solche eine Glasübergangstemperatur von nicht mehr als 80 °C, besonders bevorzugt von nicht mehr als 60 °C aufweisen. Üblicherweise besitzen Copolymere oder Copolymerenmischungen zusammengesetzt aus Alkenen und α,β-ungesättigten Carbonsäuren mit einem gewichtsmittleren Molekulargewicht M_{w} von nicht mehr als 20.000 u diese Eigenschaft, so dass Copolymere oder Copolymermischungen mit einem gewichtsmittleren Molekulargewicht von nicht mehr als 20.000 u, insbesondere von nicht mehr als 15.000 u für Zusammensetzungen zur Versiegelung in erfindungsgemäßen Verfahren bevorzugt sind.

In einem bevorzugten Verfahren liegen die Säuregruppen des in Wasser gelösten und/oder dispergierten Copolymers oder der in Wasser gelösten und/oder dispergierten Copolymerenmischung in der Zusammensetzung zur Versiegelung zumindest teilweise neutralisiert vor. Diese Maßnahme erhöht die Fähigkeit der Copolymere zur Selbstemulgierung in der wässrigen Phase, so dass tendenziell geringere Partikelgrößen der filmbildenden organischen Bestandteile resultieren, die wiederum eine effektivere Versiegelung der Poren der Schutzschicht bewirken. Dementsprechend ist in der Zusammensetzung zur Versiegelung vorzugsweise zusätzlich ein Neutralisationsmittel enthalten.

Als Neutralisationsmittel, die in einem bevorzugten Verfahren zusätzlich in der Zusammensetzung zur Versiegelung enthalten sind, eignen sich vorzugsweise Ammoniak, Amine, metallisches Aluminium und/oder Zink, vorzugsweise in Pulverform, sowie wasserlösliche Oxide und Hydroxide der Elemente Li, Na, K, Mg, Ca, Fe(ll) und Sn(II). Dem Fachmann ist an dieser Stelle bewusst, dass die Neutralisationsmittel entsprechend ihrer Funktion mit den Bestandteilen der Zusammensetzung zur Versiegelung Neutralisationsreaktionen eingehen und daher als solche gegebenenfalls nur indirekt in Form ihrer Reaktionsprodukte nachweisbar sind. Beispielsweise reagiert metallisches Aluminium- oder Zinkpulver in der wässrigen Phase unter Wasserstoffentwicklung zu den entsprechenden Hydroxiden, die wiederum die Neutralisation von Säuregruppen des Copolymers oder der Copolymerenmischung herbeiführen, so dass letztlich nur die Kationen der Elemente Aluminium oder Zink nachweisbar sind. Die Neutralisationsmittel sind daher lediglich als Formulierungshilfe der jeweiligen Zusammensetzung zur Versiegelung zu verstehen.

Besonders bevorzugte Neutralisationsmittel sind Ammoniak und Amine, da diese beim Aushärten der applizierten Zusammensetzung zur Versiegelung durch Zuführung thermischer Energie in die Gasphase übergehen und damit nicht in der ausgehärteten Versiegelung zurückbleiben. Bevorzugte Amine, die als Neutralisationsmittel in wässrigen Zusammensetzungen zur Versiegelung eingesetzt werden können sind Morpholin, Hydrazin, Hydroxylamin, Monoethanolamin, Diethanolamin, Triethanolamin, Dimethylethanolamin und/oder Diethylethanolamin.

Die Neutralisation der Säuregruppen des Copolymers oder der Copolymerenmischung erfolgt vorzugsweise in einem solchen Maß, dass zumindest 20%, besonders bevorzugt zumindest 30% der Säuregruppen neutralisiert vorliegen. Hohe Neutralisationsgrade der Säuregruppen des Copolymers oder der Copolymerenmischung oberhalb von 50% sind in einer bevorzugten Ausführungsform des Verfahrens zu vermeiden, da hierdurch ein beträchtlicher Anteil des Copolymers oder der Copolymerenmischung in Wasser gelöst vorliegt und damit zu einer sehr hohen Viskosität beiträgt, der für die Applikation der Zusammensetzung zur Versiegelung nachteilig sein kann.

Generell ist es für die Beibehaltung optimaler rheologischer Eigenschaften der Zusammensetzung zur Versiegelung bevorzugt, das Neutralisationsmittel in einer solchen Menge hinzuzuformulieren, dass bezogen auf 1 g des Copolymers oder der Copolymerenmischung zumindest 4/z µmol, vorzugsweise zumindest 6/z µmol jeweils multipliziert mit der Säurezahl des Copolymers oder der Copolymerenmischung an Neutralisationsmittel enthalten sind, jedoch vorzugsweise nicht mehr als 10/z µmol, besonders bevorzugt nicht mehr als 8/z µmol, multipliziert mit der Säurezahl des Copolymers oder der Copolymerenmischung. Der Divisor z ist dabei eine natürliche Zahl und entspricht der Äquivalentzahl der Neutralisationsreaktion. Die Äquivalentzahl gibt an wie viel Mol Säuregruppen des Copolymers oder der Copolymerenmischung ein Mol des Neutralisationsmittels zu neutralisieren vermag.

Die wässrige Zusammensetzung zur Versiegelung enthält notwendigerweise einen Vernetzer, der erfindungsgemäß geeignet sein muss, das Copolymer oder die Copolymerenmischung zu vernetzen, .d.h. ein im Vergleich zu den Copolymeren bzw. der Copolymerenmsichung höhermolekulares Netzwerk auszubilden. Der Vernetzer kann dabei selbst über kovalente oder koordinative Bindungen mit den neutralisierten oder freien Säuregruppen des Copolymers oder der Copolymerenmischung Vernetzungsstellen bilden, über die Copolymere oder verschiedene Copolymere der Copolymerenmischung miteinander verbunden werden, oder eine intramolekulare Vernetzung lediglich katalysieren bspw. die intramolekulare Anhydridbildung durch Abspaltung von Wassermolekülen.

Es hat sich herausgestellt, dass die Ausbildung höhermolekularer Netzwerke mittels Vernetzer, die sei es kovalent oder koordinativ in das polymere Grundgerüst eingebaut werden vorteilhaft ist für eine effiziente Versiegelung der oxidischen Schutzschichten gegenüber korrosiven Medien. Dementsprechend sind solche Vernetzer erfindungsgemäß bevorzugt, die ausgewählt sind aus wasserlöslichen anorganischen Verbindungen der Elemente Zr und/oder Ti und/oder aus wasserlöslichen und/oder wasserdispergierbaren Aminoplasten und/oder Carboimiden. Vernetzer auf Basis organischer Verbindungen sind wasserlöslich und/oder wasserdispergierbar, wenn sie bei 20 °C in entionisiertem Wasser (κ<1µScm⁻¹) und einer Menge von 10 g/L einen mittleren Teilchendurchmesser von weniger als 1 µm unmittelbar nach Einwirkung einer einminütigen Scherkraft mit einem Energieeintrag von 10³ Joule pro Sekunde pro Liter einnehmen. Der mittlere Teilchendurchmesser kann dabei gemäß ISO 13320:2009 mittels Laserlichtbeugung aus kumulativen Partikelgrößeverteilungen als sogenannter D50-Wert bestimmt werden.

Geeignete Vernetzer auf Basis wasserlöslicher anorganischer Verbindungen der Elemente Zr und/oder Ti sind ausgewählt aus Alkoxiden und/oder Carbonaten, besonders bevorzugt aus Tetrabutoxyzirkonat, Tetrapropoxyzirkonat, Tetrabutoxytitanat, Tetrapropoxytitanat, Ammoniumzirkoniumcarbonat und/oder Ammoniumtitaniumcarbonat, insbesondere bevorzugt Ammoniumzirkoniumcarbonat. Derartige Verbindungen gelten als wasserlöslich, wenn ihre Löslichkeit in entionisiertem Wasser (κ<1µScm⁻¹) bei 20°C jeweils zumindest 1 g/l bezogen auf das jeweilige Element Zr und/oder Ti beträgt.

Für eine hinreichende Vernetzung der Copolymer bzw. der Copolymerenmischung im Verfahrensschritt ii) auf Basis der wasserlöslichen Verbindnungen der Elemente Zr und/oder Ti, ist es bevorzugt, wenn der Gewichtsanteil eines solchen Vernetzers bestimmt als Gewichtsanteil der Elemente Zr und/oder Ti bezogen auf den Feststoffanteil des Copolymers oder der Copolymerenmischung dividiert durch die dimensionslose Säurezahl des Copolymers oder der Copolymerenmischung in Gramm KOH/g größer als 0,04·X_{Zr} + 0,02·X_{Ti} ist. Umgekehrt ist bevorzugt, dass eben dieses Gewichtsverhältnis dividiert durch die dimensionslose Säurezahl des Copolymers oder der Copolymerenmischung in Gramm KOH/g vorzugsweise kleiner als 0,12·X_{Zr} + 0,06·X_{Ti} ist, um stabile Zusammensetzungen zur Versiegelung zu erhalten. X_{Zr} und X_{Ti} sind dabei die jeweiligen Massenbrüche der Elemente Zr oder Ti bezogen auf den Gesamtanteil der Elemente Zr und Ti des Vernetzers.

In einer bevorzugten Ausführungsform des Verfahrens basiert der Vernetzer auf organischen Verbindungen, die eine kovalente Vernetzung der Copolymere bzw. der Copolymerenmischung im Verfahrensschritt ii) bewirken und damit insbesondere solche, die ausgewählt sind aus wasserlöslichen und/oder wasserdispergierbaren Aminoplasten und/oder Carboimiden.

Besonders geeignete Aminoplast-Vernetzer basieren auf Melamin, Harnstoff, Dicyandiamid, Guanamine und/oder Guanidin. Insbesondere bevorzugt sind Melamin-Formaldehyd-Harze als Aminoplast-Vernetzer mit einem molaren Verhältnis von Formaldehyd : Melamin, das bevorzugt größer als 1,5 ist.

Alternativ oder zusätzlich ist der Vernetzer in der Zusammensetzung zur Versiegelung ein Carbodiimid. Carbodiimide weisen zumindest eine Diimid-Struktureinheiten der Art -C=N=C-auf. Sie sind jedoch bevorzugt polyfunktional mit einem Diimid-Äquivalentgewicht im Bereich von 300-500 Gramm der polyfunktionalen Verbindung pro Mol an Diimid-Gruppen. Insbesondere sind Carbodiimide bevorzugt, die aus Isocyanaten mit zumindest zwei Isocyanat-Gruppen durch Decarboxylierung hervorgehen, insbesondere solche der allgemeinen Strukturformel (I): 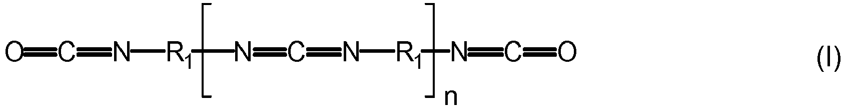 mit
- n:: ganze natürliche Zahl im Bereich von 1 bis 20;
- R₁:: aromatischer, aliphatischer oder alicyclischer Rest mit nicht mehr als 16 Kohlenstoffatomen;

Die Isocyanat-Gruppen wiederum sind vorzugsweise mit hydrophilen Schutzgruppen blockiert, die als solche dem Carbodiimid eine verbesserte Wasserdispergierbarkeit bzw. Wasserlöslichkeit verleihen. Geeignete Schutzgruppen mit hydrophilem Charakter sind beispielsweise Hydroxyalkylsulfonsäuren, Hydroxyalkylphosphonsäuren, Hydroxyalkylphosphorsäuren, Polyalkylenglykole sowie tertiäre oder quarternäre Aminoalkylalkohole und Aminoalkylamine.

In einer besonders bevorzugten Ausführungsform ist der Vernetzer der Zusammensetzung zur Versiegelung somit ausgewählt aus Carbodiimiden mit blockierten terminalen Isocyanat-Gruppen gemäß der allgemeinen Strukturformel (II): 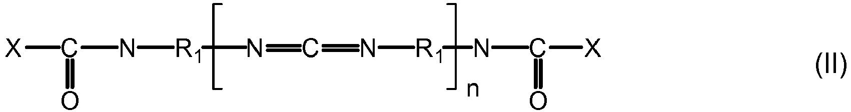 mit
- n:: ganze natürliche Zahl im Bereich von 1 bis 20;
- R₁:: aromatischer, aliphatischer oder alicyclischer Rest mit nicht mehr als 16 Kohlenstoffatomen;
- X:: -NH-R₁-N(R₁)₂, -O-R₁-N(R₁)₂, -NH-R₁-N(R₁)₃Y, -O-R₁-N(R₁)₃Y, -O-R₁-SO₃Z, -O-R₁-O-PO₃Z, -O-R₁- PO₃Z, -O-(C₂H₄)ₚ-OH, -O-(C₃H₆)ₚ-OH
mit Y: Hydroxid, Chlorid, Nitrat, Sulfat
mit Z: Wasserstoff, Ammmonium, Alkali- oder Erdalkalimetall
mit p: ganze natürliche Zahl im Bereich von 1 bis 6

Bevorzugte Diisocyanate, die durch Decarboxylierung die entsprechenden Carbodiimide ergeben sind beispielsweise Hexamethylendiisocyanat, Cyclohexan-1,4-diisocyanat, Xylylendiisocyanat, Isophorondiisocyanat, Dicyclohexylmethan-4,4-diisocyanat, Methylcyclohexandiisocyanat and Tetramethylxylylendiisocyanat, 1,5-naphthylendiisocyanat, 4,4-diphenylmethandiisocyanat, 4,4-diphenyldimethylmethandiisocyanat, 1,3-phenylendiisocyanat, 1,4-phenylen-diisocyanat, 2,4-toluenylendiisocyanat, 2,6-toluenylendiisocyanat,

Grundsätzlich ist es bevorzugt, dass der organische Vernetzer, insbesondere das Aminoplast und/oder das Carboimid, ein gewichtsmittleres Molekulargewicht Mw von nicht mehr als 2.500 u, besonders bevorzugt von nicht mehr als 1.500 u aufweist, um eine hinreichende Vernetzung mit dem Copolymer oder der Copolymerenmischung zu gewährleisten.

In einer besonders bevorzugten Ausführungsform des erfindungsgemäßen Verfahrens zur Versiegelung enthält die wässrige Zusammensetzung zur Versiegelung im Schritt (i):
a) 0,5 bis 15 Gew.-%, vorzugsweise 2 bis 10 Gew.-% des zuvor beschriebenen Copolymers oder der Copolymerenmischung,
b) 0,5 bis 10 Gew.-%, vorzugsweise 1 bis 6 Gew.-% eines Vernetzers auf Basis wasserlöslicher und/oder wasserdispergierbarer Aminoplaste und/oder Carboimide,
c) bis zu 6 Gew.-% eines Neutralisationsmittels ausgewählt aus Ammoniak und/oder Aminen, vorzugsweise Alkanolaminen,
d) bis zu 6 Gew.-%, jedoch vorzugsweise zumindest 0,1 Gew.-% eines Verdickers ausgewählt aus polymeren organischen Verbindungen, die keine Verbindungen a) darstellen, vorzugsweise aus Polyacrylaten, die in Form Ihrer freien Säure eine Säurezahl von mehr als 200 mg/g KOH aufweisen,
e) bis zu 5 Gew.-% an weiteren Hilfsstoffen, vorzugsweise ausgewählt aus Korrosionsinhibitoren, Verlaufsmitteln, Stabilisatoren, Tensiden, Pigmenten, die dem Fachmann auf dem Gebiet der Formulierung von Lacken allgemein bekannt sind, und
f) weniger als 5 Gew.-% an organischen Lösemitteln.

In einem bevorzugten erfindungsgemäßen Verfahren erfolgt das In-Kontakt-Bringen im Schritt (i) durch Aufbringen eines Nassfilms der wässrigen Zusammensetzung zur Versiegelung mittels Aufsprühen oder mittels eines Eintauchvorganges, vorzugsweise mittels eines Eintauchvorganges, nach dessen Beendigung zur Ausbildung eines in homogener Filmdicke anhaftenden Nassfilms vorzugsweise unmittelbar nachfolgend überschüssiger Nassfilm entfernt wird bevor Schritt (ii) durchgeführt wird.

Das Beendigen des In-Kontakt-Bringens durch Eintauchen erfolgt beispielsweise durch Herausnehmen des Metallsubstrats oder Absenken des Flüssigkeitsspiegels. Überschüssiger Nassfilms kann durch Abtropfen oder Abblasen oder durch Abquetschen vom Metallsubstrat entfernt werden. Die Zusammensetzung zur Versiegelung ist derart formuliert, dass die oxidische Schutzschicht optimal benetzt wird und damit die zuvor genannten konventionellen Applikationsverfahren problemlos durchgeführt werden können und keine besonderen technischen Maßnahmen erfordern. Ein In-Kontakt-Bringen beispielsweise mittels Vakuumimprägnation ist zwar möglich, aber nicht erforderlich für eine zufriedenstellende Versiegelung.

Während des Verfahrensschrittes i) ist eine Kontaktzeit der Zusammensetzung zur Versiegelung mit dem mit der oxidischen Schutzschicht versehenen Metallsubstrat von zumindest einer 1 Sekunde, vorzugsweise von zumindest 10 Sekunden, bevorzugt. Aus Gründen der Verfahrensökonomie beträgt die Kontaktzeit jedoch vorzugsweise nicht mehr als 120 Sekunden, besonders bevorzugt nicht mehr als 60 Sekunden.

Im erfindungsgemäßen Verfahren zur Versiegelung folgt dem In-Kontakt-Bringen des die oxidische Schutzschicht tragenden Metallsubstrats mit der wässrigen Zusammensetzung enthaltend das filmbildende Polymer ein Verfahrensschritt zur Aushärtung. In einer bevorzugten Verfahrensweise wird dabei thermischer Energie derart zugeführt, dass in der Spitze eine Temperatur des Substrats von zumindest 120 °C, besonders bevorzugt von zumindest 160 °C, jedoch vorzugsweise von weniger als 200 °C gemessen wird (sog. "Peak Metal Temperature").

Weiterhin ist es bevorzugt, dass nach dem Schritt ii) auf der oxidischen Schutzschicht eine solche Menge an organischen Bestandteilen der wässrigen Zusammensetzung zur Versiegelung verbleibt, die bei vollständiger Pyrolyse eine Menge von zumindest 1g CO₂, vorzugsweise zumindest 4g CO₂, jedoch nicht mehr als 20g CO₂ jeweils pro Quadratmeter freisetzt. Eine vollständige Pyrolyse kann bei 500°C und Luftzufuhr erreicht werden (sog. "Vergasen"), wenn die Pyrolyse-Temperatur hinreichend lang aufrechterhalten wird.

Das mit der oxidischen Schutzschicht versehene Metallsubstrat ist Aluminium. Der Grund liegt zum einen in der besonderen Affinität dieser Substrate zum filmbildenden organischen Polymer enthaltend in der Zusammensetzung zur Versiegelung und zum anderen in ihrer Eigenschaft in konventionellen technischen Verfahren zur korrosionsschützenden Erstbehandlung oxidische Schutzschichten mit hoher Porösität auszubilden, so dass eine Versiegelung für diese Substrate unmittelbar im Anschluss an eine solche korrosionsschützende Erstbehandlung besonders bedeutend ist.

Die oxidische Schutzschicht besteht im Wesentlichen aus Oxiden und/oder Hydroxiden der Elemente Si, Ti und/oder Zr. Eine Schutzschicht besteht jedenfalls dann im Wesentlichen aus Oxiden und/oder Hydroxiden dieser Elemente, wenn zum einen der Anteil an Nichtmetallen in der Schutzschicht kleiner als 10 at.% und zum anderen der Anteil an der Elemente Si, Ti und Zr in der Schutzschicht bezogen auf den Gesamtanteil aller Metalle zumindest 30 at.-%, vorzugsweise zumindest 50 at.%, beträgt.

Derartige oxidische Schutzschichten auf den Substraten Aluminium und Magnesium sind durch elektrolytische Verfahren zugänglich. Insbesondere eignen sich elektrolytische Verfahren, in denen die Substrate zumindest teilweise an Anode geschaltet sind und der Elektrolyt wasserlösliche Verbindungen der Elemente Si, Ti und/oder Zr enthält, zur Bereitstellung oxidischer Schutzschichten, die im Wesentlichen aus Oxiden und/oder Hydroxiden der Elemente Si, Ti und/oder Zr bestehen. Verbindungen als Komponenten in Elektrolyten zur Abscheidung oxidsicher Schutzschichten gelten dann als wasserlöslich, wenn ihre Löslichkeit in entionisiertem Wasser (κ<1µScm⁻¹) bei 20°C jeweils zumindest 1 g/l bezogen auf das jeweilige Element Si, Ti und/oder Zr beträgt.

Insbesondere sind solche elektrolytischen Verfahren geeignet, in denen zumindest teilweise eine elektrische Spannung zur Abscheidung einer Schutzschicht an das Substrat angelegt wird, die oberhalb der Zersetzungsspannung des wässrigen Elektrolyten liegt, wobei das Substrat als Anode geschaltet ist und vorzugsweise während des Anlegens der Spannung zur Abscheidung einer Schutzschicht eine mittlere Spannung von zumindest 50 V, besonders bevorzugt von zumindest 200 V, aufgeprägt wird. Derartige Verfahren sind dem Fachmann als plasmaelektrolytische Verfahren aus dem Stand der Technik bekannt (WO 2003/029529 A1, WO 2006/047501).

Folgerichtig umfasst die vorliegende Erfindung in einem weiteren Aspekt ein Verfahren zur korrosionsschützenden Behandlung eines Metallsubstrates ausgewählt aus Aluminium und/oder Magnesium, bei dem
(1) das Metallsubstrat mit einem wässrigen Elektrolyten in Kontakt gebracht wird, der wasserlösliche Verbindungen der Elemente Si, Ti und/oder Zr enthält, und während des In-Kontakt-Bringens zumindest teilweise eine elektrische Spannung zur Abscheidung einer Schutzschicht an das Substrat angelegt wird, die oberhalb der Zersetzungsspannung des wässrigen Elektrolyten liegt, wobei das Substrat als Anode geschaltet ist und vorzugsweise während des Anlegens der Spannung zur Abscheidung einer Schutzschicht eine mittlere Spannung von zumindest 50 V, besonders bevorzugt von zumindest 200 V, aufgeprägt wird;
(2) mit oder ohne dazwischenliegendem Spül- und Trocknungsschritt das mit der Schutzschicht versehene Metallsubstrat mit einer wässrigen Zusammensetzung zur Versiegelung, die eine Auslaufzeit gemessen mit einem DIN Auslaufbecher 4mm von nicht mehr als 50 Sekunden aufweist, enthaltend
   a) ein Copolymer oder eine Copolymerenmischung zumindest eines aliphatischen und acyclischen Alkens mit zumindest einer α,β-ungesättigten Carbonsäure in wasserdispergierter und/oder wassergelöster Form, wobei die Säurezahl des Copolymers oder der Copolymerenmischung zumindest 20 mg KOH / g, jedoch nicht mehr als 200 mg KOH / g beträgt; und
   b) einen Vernetzer
      in Kontakt gebracht wird; und anschließend
(3) unter Zuführung thermischer Energie eine Trocknung und/oder Aushärtung des im Schritt (2) aufgebrachten Nassfilms erfolgt.

Die zuvor aufgeführten bevorzugten Ausführungsformen des erfindungsgemäßen Verfahren zur Versiegelung sind ebenfalls bevorzugte Ausführungsformen der Verfahrensschritte (2) und (3) des erfindungsgemäßen Verfahrens zur korrosionsschützenden Behandlung eines Metallsubstrates.

Weiterhin umfasst die vorliegende Erfindung die Verwendung einer wässrigen Zusammensetzung enthaltend ein Copolymer oder eine Copolymerenmischung zumindest eines aliphatischen und acyclischen Alkens mit zumindest einer α,β-ungesättigten Carbonsäure in wasserdispergierter und/oder wassergelöster Form, wobei die Säurezahl des Copolymers oder der Copolymerenmischung zumindest 20 mg KOH / g, jedoch nicht mehr als 200 mg KOH / g beträgt und die Säuregruppen des Copolymers oder der Copolymerenmischung in wasserdispergierter Form zumindest zu 20%, jedoch nicht mehr als zu 60% neutralisiert vorliegen, zur Versiegelung einer Schutzschicht basierend auf Oxiden und/oder Hydroxiden der Elemente Si, Ti und/oder Zr auf einem Aluminiumsubstrat, wobei die Schutzschicht eine Dicke von zumindest 2 µm aufweist. Bevorzugt basiert die Schutzschicht auf Oxiden und/oder Hydroxiden des Elements Ti und hat eine Dichte von weniger als 3,5 g/cm³.

Die Schutzschicht basiert jedenfalls dann auf Oxiden und/oder Hydroxiden des Elements Ti, wenn zum einen der Anteil an Nichtmetallen in der Schutzschicht kleiner als 10 at.% und zum anderen der Anteil des Elements Ti in der Schutzschicht bezogen auf den Gesamtanteil aller Metalle zumindest 30 at.-%, vorzugsweise zumindest 50 at.%, beträgt.

Die Dichte der Schutzschicht bestimmt sich aus der Schichtauflage in g/cm² dividiert durch die Schichtdicke in cm, wobei die Schichtauflage experimentell bestimmt wird aus dem flächenbezogenen Gewichtsunterschied eines Aluminiumbleches vor und nach der Aufbringung der Schutzschicht in g/cm² reduziert um den flächenbezogenen Anteil des Gewichtsunterschieds in g/cm² hervorgerufen durch die Auflösung des Aluminiumsubstrats wiederum bestimmt aus der Differenz des Anteils an gelöstem Aluminium im Flüssigmedium des nasschemischen Verfahrens vor und nach der Aufbringung der Schutzschicht. Das gängigste nasschemische Verfahren zur Aufbringung dieser speziellen Schutzschicht auf Aluminium ist ein elektrolytisches, vorzugsweise ein plasmaelektrolytisches Verfahren.

### Ausführungsbeispiele:

Die Rezepturen der Tabelle 1 wurden zur Versiegelung von plasmaelektrolytisch beschichteten Aluminiumblechen (AA6014; Prüfbleche der Fa. Chemetall) eingesetzt.

Hierfür wurden zunächst gereinigte und entfette Aluminiumbleche für 3 Minuten in einem Elektrolyten (pH-Wert 2,5) enthaltend 4,5 g/L Phosphorsäure und 12 g/L Hexafluorotitansäure potentiostatisch bei einer Spannung von 435 V beschichtet. Die resultierende auf Oxiden und Hydroxiden von Titan basierende Schutzschicht hatte eine Schichtdicke von 10-12 µm gemessen mit einer Wirbelstromsonde gemäß DIN-ISO 2360 (DUALSCOPE® MP40E-S mit Messsonde ED10; Fa. Fischer).

Die derart beschichteten Bleche wurden sodann für 30, 60 oder 120 Sekunden in die Formulierungen A - C eingetaucht und anschließend für eine Minute zum Abtropfen aufgehängt. Der auf den Blechen nach dem Abtropfen verbleibende Nassfilm wurde sodann im Ofen bei 230 °C für 2 Minuten ausgehärtet. Die Schichtdicke der ausgehärteten Versiegelung betrug in etwa 8 µm nach Messung gemäß dem vorgenannten Wirbelstromverfahren.

| Tab. 1 Wässrige Formulierungen A - C zur Versiegelung enthaltend ein Ethylen-Acrylsäure-Copolymer | | | |
|---|---|---|---|
| | A | B | C |
| Ethylen-Acrylsäure-Copolymer (18-20 Gew.-% Acrylsäure) | 5,8 | 5,8 | 5,6 |
| Dimethylethanolamin | 1,4 | 1,4 | - |
| Ammoniak (15 Gew.-%) | - | - | 0,7 |
| Bacote® 20 ¹ (Fa. Mel Chemicals) | 2,0 | - | - |
| Cymel® 327 ² (Fa. Allnex) | - | 4,0 | 4,0 |
| Polyacrylat ³ | 0,5 | 0,5 | 0,5 |
| Auslaufzeit DIN 4mm in Sekunden | 22 | 22 | 22 |
| ¹ basische Ammoniumzirconiumcarbonat-Lösung (20 Gew.-% Zr) | | | |
| ² Melaminharz (Trocknung über 20 min bei 230 °C) | | | |
| ³ Verdicker mit pH-Wert 2,5; 30-70 mPas nach ISO 2555 | | | |

Die versiegelten plasmaelektrolytisch beschichteten Aluminiumbleche wurden einem CASS Test (240h) gemäß DIN EN-ISO 9227 unterzogen. Sämtliche versiegelten Bleche wiesen nach der Belastungsdauer einen Blasengrad (0 (S0) - 5 (S5)) nach DIN EN-ISO 4628-2 von 0 (S0) und einen Rostgrad (0-5) nach DIN EN-ISO 4628-3 von maximal 1 auf. Das unversiegelte plasmaelektrolytisch beschichtete Aluminiumblech zeigte einen Rostgrad von 5.

## Patentansprüche

1. Verfahren zur korrosionsschützenden Behandlung eines Metallsubstrates ausgewählt aus Aluminium, bei dem
(1) das Metallsubstrat mit einem wässrigen Elektrolyten in Kontakt gebracht wird, der wasserlösliche Verbindungen der Elemente Si, Ti und/oder Zr enthält, und während des In-Kontakt-Bringens zumindest teilweise eine elektrische Spannung zur Abscheidung einer Schutzschicht an das Substrat angelegt wird, die oberhalb der Zersetzungsspannung des wässrigen Elektrolyten liegt, wobei das Substrat als Anode geschaltet ist;
(2) mit oder ohne dazwischenliegendem Spül- und Trocknungsschritt das mit der Schutzschicht versehene Metallsubstrat mit einer wässrigen Zusammensetzung zur Versiegelung, die eine Auslaufzeit gemessen nach DIN 53211 bei 20°C mit einem DIN Auslaufbecher 4mm von nicht mehr als 50 Sekunden aufweist, enthaltend
a) ein Copolymer oder eine Copolymerenmischung zumindest eines aliphatischen und acyclischen Alkens mit zumindest einer α,β-ungesättigten Carbonsäure in wasserdispergierter und/oder wassergelöster Form, wobei die Säurezahl des Copolymers oder der Copolymerenmischung gemessen wie in der Beschreibung offenbart zumindest 20 mg KOH / g, jedoch nicht mehr als 200 mg KOH / g beträgt; und
b) einen Vernetzer
in Kontakt gebracht wird; und anschließend
(3) unter Zuführung thermischer Energie eine Trocknung und/oder Aushärtung des im Schritt (2) aufgebrachten Nassfilms erfolgt.

2. Verfahren nach Anspruch 1, **dadurch gekennzeichnet, dass** der Anteil des Copolymers oder der Copolymerenmischung zumindest 5 Gew.-%, jedoch vorzugsweise nicht mehr als 30 Gew.-%, besonders bevorzugt nicht mehr als 20 Gew.-% bezogen auf die wässrige Zusammensetzung beträgt.

3. Verfahren nach einem oder mehreren der vorherigen Ansprüche, **dadurch gekennzeichnet, dass** der Vernetzer gemäß der Komponente b) ausgewählt ist aus wasserlöslichen anorganischen Verbindungen der Elemente Zr und/oder Ti, aus wasserlöslichen und/oder wasserdispergierbaren Aminoplasten und/oder Carboimiden.

4. Verfahren nach einem oder mehreren der vorherigen Ansprüche, **dadurch gekennzeichnet, dass** das aliphatische und acyclische Alken des Copolymers oder der Copolymerenmischung der wässrigen Zusammensetzung zur Versiegelung im Schritt (2) ausgewählt ist aus Ethen, Propen, 1-Buten, 2-Buten, Isobuten, 1,3-Butadien und/oder 2-Methylbuta-1,3-dien, vorzugsweise Ethen und/oder Propen.

5. Verfahren nach einem oder mehreren der vorherigen Ansprüche, **dadurch gekennzeichnet, dass** die α,β-ungesättigte Carbonsäure des Copolymers oder der Copolymerenmischung der wässrigen Zusammensetzung zur Versiegelung im Schritt (2) ausgewählt ist aus Zimtsäure, Crotonsäure, Fumarsäure, Itaconsäure, Maleinsäure, Acrylsäure und/oder Methacrylsäure, vorzugsweise Acrylsäure und/oder Methacrylsäure, besonders bevorzugt Acrylsäure.

6. Verfahren nach einem oder mehreren der vorherigen Ansprüche, **dadurch gekennzeichnet, dass** die Säuregruppen des Copolymers oder der Copolymerenmischung in der wässrigen Zusammensetzung zur Versiegelung zumindest zu 20%, vorzugsweise zumindest zu 30%, jedoch nicht mehr als zu 60%, vorzugsweise nicht mehr als zu 50% neutralisiert vorliegen.

7. Verfahren nach einem oder mehreren der vorherigen Ansprüche, **dadurch gekennzeichnet, dass** das In-Kontakt-Bringen im Schritt (2) durch Aufbringen eines Nassfilms der wässrigen Zusammensetzung zur Versiegelung mittels Aufsprühen oder mittels eines Eintauchvorganges erfolgt, vorzugsweise mittels eines Eintauchvorganges, nach dessen Beendigung zur Ausbildung eines in homogener Filmdicke anhaftenden Nassfilms vorzugsweise unmittelbar nachfolgend überschüssiger Nassfilm entfernt wird bevor Schritt (3) durchgeführt wird.

8. Verfahren nach einem oder mehreren der vorherigen Ansprüche, **dadurch gekennzeichnet, dass** die Zufuhr thermischer Energie im Schritt (3) in der Spitze zu einer Temperatur des Substrats von zumindest 120 °C, besonders bevorzugt von zumindest 160 °C, jedoch vorzugsweise von weniger als 200 °C führt (PMT, sog. Peak Metal Temperature).

9. Verfahren nach einem oder mehreren der vorherigen Ansprüche, **dadurch gekennzeichnet, dass** nach dem Schritt (3) auf der oxidischen Schutzschicht eine solche Menge der organischen Feststoffbestandteile der wässrigen Zusammensetzung zur Versiegelung verbleibt, die bei vollständiger Pyrolyse eine Menge von zumindest 1g CO₂, vorzugsweise zumindest 4g CO₂, jedoch nicht mehr als 20g CO₂ freisetzt.

10. Verwendung einer wässrigen Zusammensetzung enthaltend ein Copolymer oder eine Copolymerenmischung zumindest eines aliphatischen und acyclischen Alkens mit zumindest einer α,β-ungesättigten Carbonsäure in wasserdispergierter und/oder wassergelöster Form, wobei die Säurezahl des Copolymers oder der Copolymerenmischung gemessen wie in der Beschreibung offenbart, zumindest 20 mg KOH / g, jedoch nicht mehr als 200 mg KOH / g beträgt und die Säuregruppen des Copolymers oder der Copolymerenmischung in wasserdispergierter Form zumindest zu 20%, jedoch nicht mehr als zu 60% neutralisiert vorliegen, zur Versiegelung einer Schutzschicht basierend auf Oxiden und/oder Hydroxiden des Elements Ti auf einem Aluminiumsubstrat, wobei die Schutzschicht eine Dicke von zumindest 2 µm und eine Dichte von weniger als 3,5 g/cm³ aufweist.

## Claims

1. A method for anti-corrosion treatment of a metal substrate selected from aluminum, wherein
(1) the metal substrate is brought into contact with an aqueous electrolyte which contains water-soluble compounds of the elements Si, Ti and/or Zr and, during the contacting, an electrical voltage which is above the decomposition voltage of the aqueous electrolyte is applied, at least in part, to the substrate in order to deposit a protective layer, the substrate being connected as an anode;
(2) with or without an intermediate rinsing and drying step, the metal substrate provided with the protective layer is brought into contact with an aqueous composition for sealing that has a flow time, measured according to DIN 53211 at 20 °C with a 4mm DIN flow cup, of not more than 50 seconds, and contains
a) a copolymer or a copolymer mixture of at least one aliphatic and acyclic alkene having at least one α,β-unsaturated carboxylic acid in water-dispersed and/or water-dissolved form, the acid number of the copolymer or copolymer mixture, measured as disclosed in the description, being at least 20 mg KOH/g, but not more than 200 mg KOH/g; and
b) a crosslinking agent; and
subsequently
(3) the wet film applied in step (2) is dried and/or cured by supplying thermal energy.

2. The method according to claim 1, **characterized in that** the proportion of the copolymer or copolymer mixture is at least 5 wt.%, but preferably not more than 30 wt.%, particularly preferably not more than 20 wt.%, based on the aqueous composition.

3. The method according to one or more of the preceding claims, **characterized in that** the crosslinking agent according to component b) is selected from water-soluble inorganic compounds of the elements Zr and/or Ti, from water-soluble and/or water-dispersible aminoplasts and/or carboimides.

4. The method according to one or more of the preceding claims, **characterized in that** the aliphatic and acyclic alkene of the copolymer or copolymer mixture of the aqueous composition for sealing in step (2) is selected from ethene, propene, 1-butene, 2-butene, isobutene, 1,3-butadiene and/or 2-methylbuta-1,3-diene, preferably ethene and/or propene.

5. The method according to one or more of the preceding claims, **characterized in that** the α,β-unsaturated carboxylic acid of the copolymer or copolymer mixture of the aqueous composition for sealing in step (2) is selected from cinnamic acid, crotonic acid, fumaric acid, itaconic acid, maleic acid, acrylic acid and/or methacrylic acid, preferably acrylic acid and/or methacrylic acid, particularly preferably acrylic acid.

6. The method according to one or more of the preceding claims, **characterized in that** at least 20%, preferably at least 30%, but no more than 60%, preferably no more than 50%, of the acid groups of the copolymer or copolymer mixture are present in the aqueous composition in neutralized form for sealing.

7. The method according to one or more of the preceding claims, **characterized in that** the contacting in step (2) is carried out by applying a wet film of the aqueous composition for sealing by means of spraying or by means of an immersion process, preferably by means of an immersion process, after the completion of which, preferably immediately afterwards, excess wet film is removed before step (3) is carried out in order to form a wet film adhering in a homogeneous film thickness.

8. The method according to one or more of the preceding claims, **characterized in that** the supply of thermal energy in step (3) leads to a peak temperature of the substrate of at least 120 °C, particularly preferably of at least 160 °C, but preferably of less than 200 °C (PMT, peak metal temperature).

9. The method according to one or more of the preceding claims, **characterized in that**, after step (3), an amount of the organic solid constituents of the aqueous composition for sealing remains on the oxidic protective layer that releases, on complete pyrolysis, an amount of at least 1 g CO₂, preferably at least 4 g CO₂, but not more than 20 g CO₂.

10. The use of an aqueous composition containing a copolymer or a copolymer mixture of at least one aliphatic and acyclic alkene having at least one α,β-unsaturated carboxylic acid in water-dispersed and/or water-dissolved form, wherein the acid number of the copolymer or copolymer mixture, measured as disclosed in the description, is at least 20 mg KOH/g, but not more than 200 mg KOH/g, and at least 20%, but not more than 60%, of the acid groups of the copolymer or copolymer mixture in water-dispersed form are present in neutralized form, in order to seal a protective layer based on oxides and/or hydroxides of the element Ti on an aluminum substrate, wherein the protective layer has thickness of at least 2 µm and a density of less than 3.5 g/cm³.

## Revendications

1. Procédé de traitement anticorrosion d'un substrat métallique choisi dans le groupe constitué par l'aluminium, dans lequel
(1) le substrat métallique est mis en contact avec un électrolyte aqueux qui contient des composés hydrosolubles des éléments Si, Ti et/ou Zr, et pendant la mise en contact, une tension électrique est appliquée au moins partiellement au substrat pour le dépôt d'une couche protectrice sur le substrat, ladite tension électrique étant supérieure à la tension de décomposition de l'électrolyte aqueux, le substrat étant branché comme anode ;
(2) avec ou sans étape de rinçage et de séchage intermédiaire, le procédé comprend le substrat métallique revêtu de la couche protectrice à l'aide d'une composition aqueuse de scellement qui présente un temps d'écoulement inférieur ou égal à 50 secondes, mesuré selon la norme DIN 53211, à 20°C à l'aide d'une coupe de viscosité DIN de 4 mm, ladite composition contenant
a) un copolymère ou un mélange de copolymères d'au moins un alcène aliphatique et acyclique comportant au moins un acide carboxylique insaturé α,β sous une forme dispersée dans l'eau et/ou dissoute dans l'eau, l'indice d'acide du copolymère ou du mélange de copolymères, mesuré comme indiqué dans la description, étant d'au moins de 20 mg de KOH/g, mais pas plus de 200 mg de KOH/g ; et
b) un agent de réticulation mis en contact ; et
par la suite
(3) le film humide appliqué à l'étape (2) est séché et/ou durci par l'apport d'énergie thermique.

2. Procédé selon la revendication 1, **caractérisé en ce que** la proportion du copolymère ou du mélange de copolymères est d'au moins 5 % en poids, mais de préférence inférieure ou égale à 30 % en poids, plus préférablement inférieure ou égale à 20 % en poids, par rapport à la composition aqueuse.

3. Procédé selon au moins l'une des revendications précédentes, **caractérisé en ce que** l'agent de réticulation selon le composant b) est choisi dans le groupe constitué par des composés inorganiques hydrosolubles des éléments Zr et/ou Ti, dans le groupe constitué par des aminoplastes et/ou carboimides hydrosolubles et/ou dispersibles dans l'eau.

4. Procédé selon au moins l'une des revendications précédentes, **caractérisé en ce que** l'alcène aliphatique et acyclique du copolymère ou du mélange de copolymères de la composition aqueuse de scellement à l'étape (2) est choisi dans le groupe constitué par l'éthène, le propène, le 1-butène, le 2-butène, l'isobutène, le 1,3-butadiène et/ou le 2-méthylbuta-1,3-diène, de préférence l'éthylène et/ou le propène.

5. Procédé selon au moins l'une des revendications précédentes, **caractérisé en ce que** l'acide carboxylique insaturé α,β du copolymère ou du mélange de copolymères de la composition aqueuse de scellement à l'étape (2) est choisi dans le groupe constitué par l'acide cinnamique, l'acide crotonique, l'acide fumarique, l'acide itaconique, l'acide maléique, l'acide acrylique et/ou l'acide méthacrylique, de préférence l'acide acrylique et/ou l'acide méthacrylique, plus préférablement l'acide acrylique.

6. Procédé selon au moins l'une des revendications précédentes, **caractérisé en ce que** les groupes acides du copolymère ou du mélange de copolymères sont neutralisés dans la composition aqueuse de scellement à au moins 20 %, de préférence à au moins 30 %, mais pas à plus de 60 %, de préférence à moins de 50 %.

7. Procédé selon au moins l'une des revendications précédentes, **caractérisé en ce que** la mise en contact à l'étape (2) est effectuée par l'application d'un film humide de la composition aqueuse de scellement au moyen d'une pulvérisation ou d'un processus d'immersion, de préférence au moyen d'un processus d'immersion au terme duquel, pour former un film humide adhérant ayant une épaisseur homogène, le film humide excédentaire est éliminé de préférence immédiatement par la suite, avant la réalisation de l'étape (3).

8. Procédé selon au moins l'une des revendications précédentes, **caractérisé en ce que** l'apport d'énergie thermique à l'étape (3) entraîne, dans la pointe, une température du substrat d'au moins 120 °C, plus préférablement d'au moins 160 °C, mais de préférence de moins de 200 °C (PMT, température de pointe du métal).

9. Procédé selon au moins l'une des revendications précédentes, **caractérisé en ce que**, après l'étape (3), une quantité de constituants solides organiques de la composition aqueuse de scellement demeure sur la couche protectrice oxydante, laquelle quantité de constituants solides, en cas de pyrolyse complète, libère une quantité d'au moins 1 g de CO₂, de préférence d'au moins 4 g de CO₂, mais pas plus de 20 g de CO₂.

10. Utilisation d'une composition aqueuse contenant un copolymère ou un mélange copolymère d'au moins un alcène aliphatique et acyclique comportant au moins un acide carboxylique insaturé α,β sous une forme dispersée dans l'eau et/ou dissoute dans l'eau, dans laquelle l'indice d'acide du copolymère ou du mélange de copolymères, mesuré comme indiqué dans la description, est d'au moins 20 mg de KOH/g, mais pas plus de 200 mg de KOH/g, et les groupes acides du copolymère ou du mélange de copolymères sous une forme dispersée dans l'eau sont neutralisés à au moins 20 %, mais pas à plus de 60 %, pour sceller une couche protectrice à base d'oxydes et/ou d'hydroxydes de l'élément Ti sur un substrat d'aluminium, la couche protectrice présentant une épaisseur d'au moins 2 µm et une densité inférieure à 3,5 g/cm³.
